# FASCICULE DE BREVET EUROPEEN

(11) **EP 3 229 937 B1**
(45) Date de publication et mention de la délivrance du brevet: **30.12.2020**
(21) Numéro de dépôt: 15820203.6
(22) Date de dépôt: 24.11.2015
(51) Int. Cl.: B08B 17/00, B08B 15/00, B01D 49/00, B23Q 11/00

(54) **MOYEN DE PREVENTION D'EXPOSITION A DES PARTICULES FINES ET/OU ULTRAFINES**
MITTEL ZUR VERHINDERUNG DER AUSSETZUNG MIT FEINEN UND/ODER ULTRAFEINEN PARTIKELN
MEANS FOR PREVENTING EXPOSURE TO FINE AND/OR ULTRAFINE PARTICLES

(30) Priorité: 25.11.2014 FR 1402659
(43) Date de publication de la demande: 18.10.2017
(73) Titulaire: Bosler, Frédéric, 67700 Savernes (FR)
(72) Inventeur: Bosler, Frédéric, 67700 Savernes (FR)
(86) Numéro de dépôt international: PCT/FR2015/000210
(87) Numéro de publication internationale: WO 2016/083679

(56) Documents cités:
- FR-A1- 2 795 351
- SU-A1- 814 655

## Description

La présente invention concerne un moyen de prévention des accidents privés ou professionnels, entre autres du travail, par exposition d'opérateurs professionnels ou privés, à la toxicité des poussières et particules fines ou ultrafines, des fibres courtes et des fibres fines, dans le cadre de leur activité.

Un seul exemple d'application de l'invention pour des préventions d'exposition sera retenu dans cette description, sans pour autant y être limité. En effet comme il sera décrit, les moyens nouveaux s'appliquent à toute prévention d'exposition à des poussières, à des particules fines ou ultrafines, à des fibres courtes et des fibres fines.

L'invention, dans cet exemple d'application, concerne donc un moyen de prévention des accidents privés ou professionnels, par exposition d'opérateurs professionnels ou privés, à la toxicité, entre autres, des fibres courtes et des fibres fines d'amiante dénommées FCA - FFA.

Plus particulièrement, de telles expositions occurrent, entre autres, lors de travaux ponctuels et localisés de mise aux normes, de réparation ou de maintenance dans des locaux de bâtiments et de constructions dont les structures ou équipements ou installations, sont contaminés ou sont constitués de matériaux friables et non friables susceptibles de contaminer l'air et partant d'exposer les dits opérateurs lors d'interventions usuelles ou particulières.

Pour mémoire, les dites poussières prises en compte sont des particules couvrant un spectre de diamètres de particules partant de 10 microns (µ) ou PM 10 à celles de diamètres de 1 micron (µ) ou PM 1.0. Les PM 10 sont présentes dans l'agriculture en particulier les cultures, l'industrie manufacturière, le résidentiel/tertiaire et le transport routier. Les PM 1.0 sont générées par le résidentiel/tertiaire, à cause principalement de la combustion du bois et dans une moindre mesure, du charbon et du fioul et dans le transport routier, de la combustion du gazole.

Pour mémoire, les dites poussières prises en compte concernent les particules ultrafines quant à elles classées dans un spectre allant de 100 nanomètres (nm) à 2.5 nm. Elles se retrouvent dans les domaines d'activités précitées et nouvelles technologies et certaines ne font que récemment l'objet d'études, de recherches et de préventions en milieu professionnel, public et privé.

Toutes ces particules fines et ultrafines peuvent donc avoir des sources d'émissions dans des locaux de bâtiments et de constructions afférents aux activités citées. Leurs effets sur le vivant sont multiples et, en combinaison ou seules, les poussières particules sont identifiées pour leurs effets dit CMR, cancérogène, mutagène ou toxique pour la reproduction.

Les moyens de détection et de mesure de concentration toxique dans les milieux professionnels et publics, ont principalement été effectués avec des procédés utilisant des microscopes optiques à contraste de phase (MOCP). Toutefois ces procédés étaient limités aux PM 1.0. Et c'est nouvellement, depuis une dizaine d'années, que des procédés par microscopie électronique à transmission analytique (META) ou lorsqu'à balayage analytique (MEBA) permettent de détecter et de mesurer des concentrations toxiques de particules ultrafines.

Les pouvoirs publics qui avaient, en bonne suite des connaissances autorisées avec les MOCP, pris des mesures pour établir d'une part des valeurs limites d'exposition professionnelle et d'autre part édicter des procédures et agréer des solutions techniques depuis la prévention d'exposition jusqu'à l'élimination des poussières et particules fines ou ultrafines, des fibres courtes et des fibres fines, dans le cadre d' activités professionnelles précitées. Les META ou MEBA ne font que renforcer ces procédures et nécessairement évoluer les techniques approuvées et éprouvées en termes de solutions aux nouvelles exigences et contraintes règlementaires.

A ce jour les principes généraux de prévention consistent à :
En premier, supprimer le risque d'exposition sur un site de construction soit par un travail robotisé et avec inéluctablement la décontamination dudit robot lorsque retiré du site, soit de créer un système clos. Ici l'invention met en exergue le caractère inapproprié de la technique et des solutions pour des travaux ponctuels et localisés de mise aux normes, de réparation ou de maintenance dans ces contextes.

En second, de réduire le risque par des techniques d'imprégnation à cœur. Il s'agit de mouiller avec ou sans agents mouillant les matériaux à travailler. Là encore l'invention met en exergue le caractère inapproprié de la technique et des solutions pour des travaux ponctuels et localisés de mise aux normes, de réparation ou de maintenance dans ces contextes.

En troisième, contenir la pollution par un confinement sous 10 Pascal (Pa) et des moyens de décontamination appropriés. Ce qui est à peine envisageable pour des travaux ponctuels et localisés de mise aux normes, de réparation ou de maintenance.

In fine, démonter et ou déconstruire reste à ce jour la seule solution. Des travaux ponctuels et localisés de mise aux normes, de réparation ou de maintenance à défaut ne peuvent que se soumettre à ces procédures.

En somme l'abattage des poussières, leur aspiration à la source avec du matériel dédié à filtres H13 type "HEPA" à très haute efficacité "THE", ou la sédimentation des fibres dans l'air par brumisation et les inévitables décontaminations matérielles et corporelles rendent impensable la réalisation de travaux ponctuels et localisés de mise aux normes, de réparation ou de maintenance.

Un opérateur, avec son équipement de protection individuelle ou EPI, équipé ou non d'appareils respiratoires ou APR, adaptés à et indiqués dans des atmosphères empoussiérées de niveau 1 inférieure à la valeur limite d'exposition professionnelle (VLEP), niveau 2 dans celles comprises entre la VLEP et 60 fois celle-ci, ou niveau 3 dans celles entre 60 et 250 fois la VLEP, pourrait effectuer des travaux ponctuels et localisés de mise aux normes, de réparation ou de maintenance. Il faudra préalablement investir dans des techniques onéreuses agréées pour satisfaire les exigences légales de prévention.

Dans l'état de l'art il n'existe aucune autre technique pour opérer dans une atmosphère non confinée préalablement d'une part, et d'autre part sans EPI lorsque les repérages avant travaux selon la norme NF X 46-020 le permettent.

Le document FR 2 795 351 concerne un dispositif pour recueillir dans un réceptacle des copeaux et poussière générés par un perçage. Les déchets tombent par gravité dans le réceptacle et ce dernier peut être vidé de son contenu pour être réemployé ultérieurement. Le document SU 814 655 divulgue un dispositif apte à capter et retenir uniquement une partie des copeaux dans un mastic. Aucun de ces documents n'apportent de solutions quant à une prévention d'exposition à des particules fines/ultrafines (amiante) pour un opérateur.

L'invention se propose donc outre de réduire les couts directs et liés aux dispositions d'administration des travaux et techniques de réalisation des travaux, de s'affranchir autant de toutes ces dispositions précitées, de permettre également dès le départ d'établir un échantillonnage sécurisé du risque, une mesure du risque via META et lorsque les conditions règlementaires sont réunies, de réaliser des travaux ponctuels et localisés de mise aux normes, de réparation ou de maintenance avec ou au mieux sans EPI.

Des travaux ponctuels et localisés de mise aux normes, de réparation ou de maintenance consistent, sans y être exhaustivement tenus, dans des locaux de bâtiments et de constructions, à poser ou déposer et reposer des éléments techniques ou matériels, sur les structures ou équipements ou installations existants ou nouveaux.

Ces travaux ponctuels et localisés concernent plus particulièrement des opérations telles que, pour l'exemple, la rupture ponctuelle de l'état de la surface de la structure ou de l'équipement ou de l'installation, avec un petit outillage tel que pour exemple toujours, visseuse, perceuse, perforatrice, burin et outillage du genre.

L'invention permet avantageusement l'emploi de tels outils sans qu'il soit nécessaire de pallier aux risques précités en rendant leur utilisation uniquement possible dans des enceintes confinées avec un opérateur sous EPI.

D'autres avantages seront mis en évidence au fil de la description non limitative qui suit.

L'invention sera mieux comprise à la lecture d'un exemple non limitatif de mise en œuvre de la présente invention décrite au regard des figures annexées :
- La fig. 1 représente une vue d'un ensemble détaillé du mode de réalisation du moyen de prévention (1).
- La fig. 2 représente les conditionnements sécables de poches (5).

Le moyen de prévention (1) est réalisé avec un dispositif de captage et de rétention (2) apte à être traversé par un outil (11) sans nuire à sa performance et à son endurance nécessaires à l'efficacité des fonctions de captage et de rétention des particules fines et/ou ultrafines. Cet outil (11) modifie l'intégrité du moyen de prévention (1) et va ainsi rendre apte à l'utilisation un ou plusieurs composants contenus sous forme de gel (4). Du fait de cette modification de l'intégrité physique, le dispositif (2) est à usage unique et ponctuel. Avantageusement l'usage unique permet de retirer le moyen de prévention (1) tout en conservant l'outil (11) de l'intervention encore engagé dans le moyen de prévention (1). Un autre avantage de cette caractéristique est la possibilité de changer d'outillage avec un nouveau dispositif de captage et de rétention (2) durant une intervention sans déroger aux principes généraux de prévention et d'élimination des particules fines et/ou ultrafines. Les particules fines et/ou ultrafines sont par exemple des poussières, des fibres courtes ou fibres d'amiante, de bois, de plâtre, etc. Lors de l'intervention ces poussières ou fibres sont captées et retenues dans le gel. De manière avantageuse les fibres sont mélangées au gel.

Le dispositif de captage et de rétention (2) est conçu dans une matière souple et résistante et étanche afin d'autoriser le passage forcé au travers de ses parois (7,8), d'un outil (11) manuel ou mécanique ou électrique lors de sa mise en service, durant son utilisation et lors de son retrait des opérations. C'est une matière plastique, telle un PVC sans y être limitée. La souplesse de cette matière PVC permet d'assurer par effet élastique, une relative étanchéité par rapport à un contenu et à un outil (11). Cette matière PVC permet à l'image d'une bague élastique de serrer l'outil (11), un burin par exemple, ou le cas échéant un porte-outil, une perceuse par exemple. Cette matière PVC est résistante à l'usure et à l'abrasion pour permettre le temps des travaux ponctuels à divers outils de percer, forer, ou d'exécuter ce pour quoi ils sont conçus.

Avantageusement les caractéristiques physiques de la matière PVC constituant le dispositif de captage et de rétention (2) permet à la fois le maintien de l'outil (11) et du contenu sans limiter la maniabilité des outils (11), leur performance ou leur efficacité.

Le moyen de prévention (1) comporte un dispositif de captage et de rétention (2) des particules fines et/ou ultrafines réalisé avec un gel (4). Ce gel (4) est contenu dans une poche (5) PVC scellée hermétiquement. Ce gel (4) conserve une viscosité initiale constante à tous les stades de l'intervention. Cette viscosité déterminée permet au gel (4) de rester contenu dans le dispositif de captage et de rétention (2) durant et après les travaux. Avantageusement ce gel (4) participe à la réalisation de l'étanchéité du moyen de prévention (1). Ultérieurement, sans générer de pollution extérieure, il permet l'éloignement du moyen de prévention (1) avec son outil (11) et en bonne suite conforme aux procédures, il autorise l'encapsulement sécurisé du moyen de prévention (1) avec son outil (11) à des fins de traitement d'analyse, de conditionnement, de transport et d'élimination de l'ensemble du moyen de prévention (1). Dans une alternative la viscosité du gel (4) peut être amenée à varier durant l'intervention. Ainsi la viscosité diminue localement autour de l'outil (11) durant le perçage et augmente lors du retrait de l'outil (11). Le gel (4) du dispositif de captage et de rétention (2) est transparent. Le gel (4) est vierge de toute inclusion telle des bulles d'air ou autre. Il s'agit pour le moins lors de la mise en œuvre du dispositif de prévention (1) de pouvoir visualiser au travers du gel (4) le point d'intervention au niveau de la source d'émission (3).

Il s'agit d'un gel (4) pouvant convenir à l'usage médical.

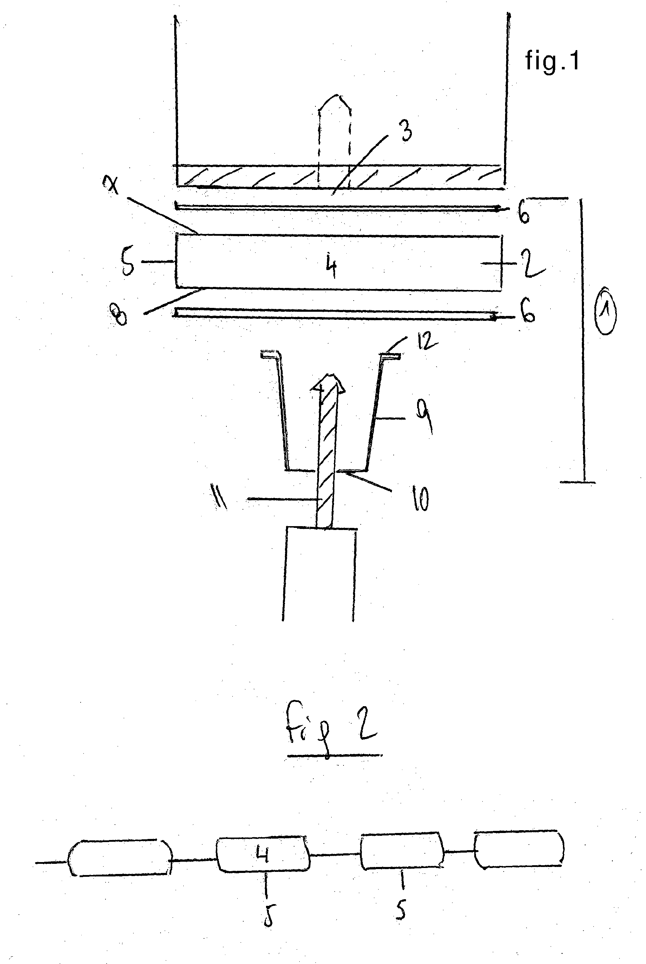

Le gel (4) du dispositif de captage et de rétention (2) réalise avec la poche (5) un ensemble hermétique modulable en volume et en dimension pour s'adapter aux travaux envisagés, lequel ensemble est soit unitaire ou une suite sécable de poches (5) tel que représenté sur la figure 2.

En captant avec le gel (4) des particules fines et/ou ultrafines générés par l'outil (11), l'invention s'attache à ce que cette capture soit effectuée sans pollution de l'environnement externe par l'intermédiaire du moyen de prévention (1). A ces fins, l'invention dote le moyen de prévention (1) d'un dispositif de captage et de rétention (2). Ce dernier comporte une poche (5) tel qu'un contenant ou un réservoir pour le gel (4). Le dispositif de captage et de rétention (2) comporte une couche adhésive (6) permettant à la poche (5) d'être rendue solidaire de la surface du matériau ou matière, friable ou non, de la paroi des structures ou équipements ou installations localisant la source d'émission des travaux à effectuer. Cette conception réalise une atmosphère confinée dans laquelle seule l'outil (11) évolue et où l'opérateur reste à l'extérieur à la zone de risque d'exposition. La surface de solidarisation peut selon les besoins être totale ou partielle ; la surface optimale étant alors au mieux la surface totale de la surface (7) du dispositif de captage et de rétention (2) et la solidarisation partielle étant considérée correspondant à une partie de la surface (7) et centrée sur le dispositif de captage et de rétention (2). La couche adhésive (6) est conçue pour adhérer fermement à des surfaces friables ou non tout en restant amovible de la paroi en fin des dits travaux.

La poche (5) a au moins une couche adhésive (6) sur l'une de ses surfaces (7,8). Les adhésifs de chacune des faces (7,8) sont de même nature et composition sans y être tenue. Cela permet une industrialisation simplifiée sans risques de confusion d'application de couches adhésives (6) de caractéristiques différentes. Les couches adhésives, exposées, celles destinées à être utilisées lors des travaux, sont protégées avec une pellicule de protection strippable. Les figures ne comportent pas la représentation de cette pellicule.

La couche adhésive (6) est préférentiellement un ensemble unique mais rien n'interdit de réaliser un ensemble composé dans laquelle chaque élément de la composition correspond à des adhésifs différents et particulièrement adaptés aux propriétés de surface d'une paroi. Afin de pouvoir localiser visuellement le point de contact de l'extrémité de l'outil (11), soit la source d'émission (3) sur la paroi. Le point d'intervention est, conformément aux procédures, repéré préalablement aux travaux sur les structures ou équipements ou installations.

La poche (5) est une poche hermétique conçue dans une matière en PVC sans y être limité. Cette poche est souple, résistante, étanche et telle que décrit pour la réalisation du dispositif de captage et de rétention (2) pour les mêmes objectifs et finalités. Afin de pouvoir localiser visuellement le point de contact de l'extrémité de l'outil (11), la poche (5) est réalisée avec un PVC tel que décrit transparent. Cette transparence est pour le moins requise au démarrage des travaux. La dite poche (5) est rendue hermétique par thermocollage des cotés et de l'orifice de remplissage avec du gel (4). La couche adhésive (6) est également transparente ou translucide.

L'étanchéité de telles poches (5) durant la phase des travaux depuis son transpercement jusqu'à l'élimination du moyen de prévention (1) avec l'outil (11) est obtenue du fait de la souplesse de la poche (5) au point de transpercement. Ces bords du fait de la caractéristique d'élasticité et de résistante du PVC composant la poche sont relativement lisses et sans déchirures. Ils exercent un appui constant et périmétral sur les parois de l'outil (11) qui le transperce.

Pour permettre un confinement sécurisé avec la couche adhésive (6) du moyen de prévention avec l'outil (11) comporte sur une de ses faces (7,8) des moyens adhésifs de solidarisation fixe ou amovible sur la poche (5). Et à ces mêmes effets, cette poche (5) comporte sur la face opposée (8) à la première (7) des moyens adhésifs (6) de solidarisation fixe ou amovible, ferme et sécurisé des bords (12) du collecteur (9) de gel (4). Ce mode opératoire est conseillé pour des travaux sur des surfaces verticales ou sur plafond, de manière à collecter les éventuelles projections de particules fines et /ou ultrafines captées par le gel (4).

Le collecteur (9) de gel (4) est un réceptacle de préférence de forme conique présentant une base ou surface opposée (12) de contact continue. En effet elle permet de réaliser la solidarisation étanche et sécurisée du fait de la couche adhésive (6).

Et son sommet qui est tronqué comporte lui une membrane (10) intégrée, réalisée ou non, avec la matière PVC décrite dans l'invention. Les caractéristiques restent identiques ; une résistance aux déchirures autorisant un transpercement de sorte que les bords dudit transpercement exercent un appui constant et périmétral sur les parois de l'outil (11) qui le transperce. Dans ce dernier cas, l'invention met à profit l'élasticité des bords du transpercement de la membrane (10) en élargissant cette ouverture permettant l'introduction de l'outil (11) dans cette ouverture. Avantageusement, un éventuel écoulement de gel (4) susceptible de se produire avec des travaux sur des plans verticaux ou en plafond ne pourra pas venir polluer l'environnement et conserver au moyen de prévention (1) un confinement sécurisé.

Le mode de réalisation préférentiel de l'invention est un seul et même ensemble, du fait de l'emploi du PVC, pour le collecteur (9) et la membrane (10). Un autre mode de réalisation qui permet l'emploi de matières différentes consiste à réaliser deux composants distincts.

Pour permettre plus amplement des déplacements directionnels en rotation de l'outil (11), en pivotement ou en va et vient, simples ou combinés qui peuvent être imposés par l'opérateur lors de l'exécution des travaux, le collecteur (9) est conformé avec une paroi lisse, plissée, ondulée ou en spirale. Une paroi en spirale ou plissée permet avantageusement d'abonder l'élasticité du PVC et permettre de suivre de plus amples débattements avec l'outil (11).

L'invention permet donc de réaliser une enceinte confinée de volume réduit pour exécuter des travaux ponctuels et localisés de mise aux normes, de réparation ou de maintenance dans des locaux de bâtiments dont les structures ou équipements ou installations, sont contaminés par des particules fines et/ou ultrafines. Après un repérage dans les règles de l'art et avoir défini le point d'intervention, l'opérateur commence par choisir le ou les outils (11) sélectionnés pour les travaux. Il a alors deux possibilités d'application de l'invention selon la taille de l'outil et le plan d'intervention. L'emploi de plusieurs outils impose successivement l'emploi d'un moyen de prévention (1) pour chacun d'eux. En effet la sécurité impose le retrait du champ opératoire voire l'élimination par encapsulage de chaque moyen de prévention (1) utilisé.

S'agissant de petit outillage de faible diamètre ou de taille réduite, tout comme sur des plans verticaux ou plafond, l'opérateur privilégiera le premier mode d'application du moyen de prévention (1) ; ce premier mode consistant à l'emploi d'une poche (5) de gel (4) avec une couche adhésive (6).

Lorsque la poche (5) de gel (4) et la couche adhésive (6) sont remises séparément à sa disposition : l'opérateur ôtera une des pellicules de protection de la couche adhésive (6) et, viendra positionner cette dernière centrée sur l'une des faces (7,8) de la poche (5).

Lorsque cette poche (5) comporte déjà intégrée ou rapportée une telle couche adhésive (6), l'opérateur ôtera l'unique pellicule de protection. Puis il positionnera la poche (5), coté adhésif dirigé vers le point d'intervention. Il repérera visuellement au travers de la poche (5) et de la couche adhésive (6) le point d'intervention qu'il positionnera au centre de celle-ci. En appliquant une pression ferme et durable sur la poche (5) en direction du point d'intervention, la couche adhésive (6) solidarisera l'ensemble de façon sécurisée et étanche. Un test manuel d'adhérence confirmera une solidarisation aboutie.

L'opérateur engagera fermement l'outil (11) au travers de la paroi de la poche (5) qui lui fait face. La seconde paroi cédera dés la première application de l'extrémité de l'outil (11) sur le point d'intervention. Le travail ou l'étape d'un travail peut être exécuté.

L'opérateur manoeuvre son outil dans l'un des sens qui convient. La poche (5) du fait de son élasticité suit les mouvements sans rupture des adhésions et sans déchirures. Le gel du fait de sa viscosité reste dans la poche et ne se répand pas sur la surface traitée pendant l'intervention. Les particules fines et/ou ultrafines sont mélangées et emprisonnées dans le gel. La protection de l'opérateur et de son environnement est totale vis à vis de l'émission de particules fines et/ou ultrafines.

S'agissant d'outils (11) de taille ou de diamètre plus important, tout comme pour des travaux sur un plan vertical ou en plafond, l'opérateur privilégiera le second mode d'application du moyen de prévention (1); ce second mode consistant en sus de l'emploi d'une poche (5) de gel (4) avec une couche adhésive (6), à mettre en œuvre le collecteur (9).

Après avoir, comme décrit, doté l'une des faces (7,8) de la poche (5) avec une couche adhésive (6); l'opérateur procédera de manière identique pour poser le collecteur (9) de manière centrée sur l'autre face (8) de la poche (5).

A nouveau, si cette poche (5) comporte déjà intégrée ou rapportée une telle une couche adhésive (6), l'opérateur ôtera la pellicule de protection. Il positionnera la base du collecteur (9) sur l'adhésif en veillant au centrage préalable du collecteur (9) sur cette surface (8). Pour ce faire, il alignera visuellement le centre de la membrane (10). Il appliquera une pression ferme sur le collecteur (9) pour permettre une liaison ferme et étanche. Un test manuel confirmera une bonne prise de l'adhésif sur le bord (12) de liaison du périmètre de la base du collecteur (9).

Une autre possibilité est de procéder au premier mode d'application et de terminer avec la pose du collecteur (9).

Le travail ou la phase de travail terminé, l'opérateur conserve l'outil engagé dans le moyen de prévention (1). Dans le cas d'un porte-outil, sans avis contraire, il désengagera préalablement l'outil de ce dernier.

Il désolidarisera soigneusement avec précaution le moyen de prévention (1) avec l'outil (11) du point d'intervention et procédera immédiatement au conditionnement ou encapsulage de l'ensemble.

Il répétera autant que de besoin les opérations pour tout autre outil désigné pour chacune des étapes d'un travail sur un point d'intervention.

Dans le cas d'un percement traversant de la structure, l'opérateur devra appliquer un premier dispositif sur le point d'intervention situé sur la paroi de la structure lui faisant face et un second dispositif selon l'invention au point de sortie de l'outil situé sur la paroi opposée.

Le moyen de prévention (1) permettra dans un autre mode de réalisation l'ouverture ponctuelle et unique d'une fenêtre sur structure en combinant deux opérations. La structure est creuse mais sa surface peut être plane, convexe ou concave. Les deux opérations sont réalisées successivement avec le même dispositif de captage et de rétention (2), dont les dimensions sont supérieures à la fenêtre à réaliser. L'opération première consiste à effectuer des percements pour délimiter les limites de la fenêtre puis à relier ces trous en découpant la structure à l'aide d'un outil à mouvement alternatif. Le mouvement alternatif permet l'application répétée de gel sur la lame et l'épaisseur de la structure traitée dans le but de capter l'émission des particules fines et/ou ultrafines. Un tel outil peut être une scie manuelle, une scie sabre, etc.

Dans le cas d'une structure pleine, l'outil, par exemple une carotteuse ou similaire, sera immergé dans un dispositif de captage et de rétention (2), l'opérateur effectuera des mouvements alternatifs de son outil entre le dispositif et la structure, le gel sera ainsi amené dans le profondeur de la structure sans émission de particules fines et/ou ultrafines nocives pour l'opérateur et son environnement.

Le moyen de prévention (1) permettra dans un autre mode de réalisation la découpe complète et la dépose d'une section de tube. Le dispositif de captage et de rétention (2) sur toute la circonférence externe du tube à l'aide d'une couche adhésive (6) sur la zone d'intervention. Ainsi préparé le tube peut être découpé sans émission de particules fines et/ou ultrafines nocives pour l'opérateur et son environnement. La découpe est réalisée à l'aide d'un outil à mouvement alternatif de préférence à l'outil rotatif.

Le moyen de prévention (1) préféré dans le cas d'une opération de décollement de dalles de sol ou décollement de flocages, enduits, peintures ou de retrait de bitumeux amiantés sans y être limité, sera un dispositif de captage et de rétention élaboré avec un gel moins visqueux. Dans le but de le répandre ou de le pulvériser plus aisément, afin d'optimiser la couverture et/ou l'infiltration du revêtement à traiter, le dispositif de captage et de rétention évitera l'émission de particules fines et/ou ultrafines comme dans les réalisations décrites précédemment.

## Revendications

1. Moyen de prévention (1) sous la forme d'un dispositif de captage et de rétention (2) à usage unique et/ou ponctuel, apte à recevoir des particules fines et/ou ultrafines à la source d'émission (3) des particules fines et/ou ultrafines, les particules fines sont des particules allant de 10 microns à 1 microns et les particules ultrafines correspondent à des particules allant de 100 nanomètres à 2,5 nanomètres, le dispositif de captage et de rétention (2) comportant un collecteur (9) sous la forme d'un réceptacle avec une membrane (10) permettant le passage d'un outil (11), **caractérise en ce que** le collecteur (9) est solidaire d'une poche (5) par une surface du collecteur (9) opposée (12) à la membrane (10), ladite poche (5) étant souple, résistante et étanche afin d'autoriser le passage forcé au travers de ses parois (7,8) de l'outil (11) et comprenant un gel transparent (4) qui est contenu dans la poche (5) et une couche adhésive (6) sur au moins une de les surfaces (7,8) de la poche (5).

2. Moyen de prévention selon la revendication 1 **caractérisé en ce que** la couche adhésive (6) est transparente ou translucide.

3. Moyen de prévention selon la revendication 1 ou 2 **caractérisé en ce que** la surface opposée (12) du collecteur (9) est supérieure à la surface côté membrane (10).

4. Moyen de prévention selon l'une quelconque des revendications 1 à 3 **caractérisé en ce que** le dispositif de captage et de rétention (2) est centré sur la source d'émission (3) des particules fines et/ou ultrafines.

## Patentansprüche

1. Präventionsmittel (1) in Form einer einmal und/oder punktuell zu verwendenden Sammel- und Rückhaltevorrichtung (2), die Fein- und/oder Feinststaubpartikel an ihrer Emissionsquelle (3) aufnehmen kann. Feinstaubpartikel haben Größen von 10 bis 1 Mikrometer und die Feinststaubpartikel von 100 Nanometern bis 2,5 Nanometer. Die Sammel- und Rückhaltevorrichtung (2) enthält einen Sammler (9) in Form eines Behälters mit einer Membran (10), durch welche ein Werkzeug (11) geführt werden kann, welche Vorrichtung **dadurch gekennzeichnet ist, dass** der Sammler (9) über die Fläche seiner der Membran (10) gegenüberliegenden Seite mit einem Beutel (5) verbunden ist, welcher Beutel (5) solchermaßen elastisch, widerstandsfähig und dicht ist, dass das Werkzeug (11) seine Wände (7, 8) durchstoßen kann, und dass der Beutel (5) zudem ein transparentes Gel (4) enthält und eine Klebeschicht (6) auf mindestens einer seiner Seiten (7, 8).

2. Präventionsmittel nach Anspruch 1, **dadurch gekennzeichnet, dass** die Klebeschicht (6) transparent oder lichtdurchlässig ist.

3. Präventionsmittel nach Anspruch 1 oder 2, **dadurch gekennzeichnet, dass** die ihm gegenüberliegende Seite (12) des Sammlers (9) größer ist als die Seite mit der Membran (10).

4. Präventionsmittel nach einem beliebigen der Ansprüche 1 bis 3, **dadurch gekennzeichnet, dass** die Sammel- und Rückhaltevorrichtung (2) auf der Emissionsquelle (3) der Fein- und/oder Feinststaubpartikel zentriert ist.

## Claims

1. Preventive means (1) in the form of a collection and retention device (2) for single and / or occasional use, the collection and retention device (27 comprises an adhesive layer (o on at least one of its surfaces 17, 8), **characterized in that** the capture and retention device (2) capable of receiving fine and / or ultrafine particles at the source of emission (3) of fine and / or ultrafine particles, fine particles are particles ranging from 10 microns to 1 microns and ultrafine particles correspond to particles ranging from 100 nanometers to 2.5 nanometers, the capture and retention device (2)includes a collector (9) in the form of a receptacle with a membrane (10) allowing passage of a tool (11), **characterized in that** the collector (9) is linked with a bag (5) by a surface of the collector (9) opposite (12) to the membrane (10), said bag (5) being flexible, resistant and waterproof in order to allow the forced passage through its walls (7,8) of the tool (11)) and includes a transparent gel (4) which is contained in the bag (5) and an adhesive layer (6) on at least one of the surfaces (7,8) of the bag (5). the opposite surface (12) is in continuous contact.

2. Prevention means according to claim 1 **characterized in that** the adhesive layer (6) is transparent or translucent.

3. Prevention means according to claim 1 or 2 **characterized in that** the opposite surface (12) of the manifold (9) is greater than the membrane side surface (10).

4. Prevention means according to any one of claims 1 to 3 **characterized in that** the capture and retention device (2) is centered on the source of emission (3) of fine particles and / or ultrafine.
